**Europäisches Patentamt**

(19) **European Patent Office**

**Office européen des brevets**

(11) Numéro de publication: **0 042 325**
**B1**

(12) **FASCICULE DE BREVET EUROPEEN**

(45) Date de publication du fascicule du brevet:
15.02.84

(51) Int. Cl.³: **F 16 D 3/38**, F 16 C 25/08

(21) Numéro de dépôt: 81400910.6

(22) Date de dépôt: 09.06.81

(54) **Joint de cardan à axes décalés.**

(30) Priorité: 17.06.80 FR 8013409

(43) Date de publication de la demande:
23.12.81 Bulletin 81/51

(45) Mention de la délivrance du brevet:
15.02.84 Bulletin 84/7

(84) Etats contractants désignés:
BE DE GB IT NL SE

(56) Documents cités:
FR - A - 395 122
FR - A - 906 523
FR - A - 2 041 381
FR - A - 2 237 520
FR - A - 2 268 983
FR - A - 2 376 331
US - A - 1 836 095
US - A - 2 927 826
US - A - 3 351 398

(73) Titulaire: **REGIE NATIONALE DES USINES RENAULT,
Boîte postale 103 8-10 avenue Emile Zola,
F-92109 Boulogne-Billancourt (FR)**

(72) Inventeur: **Chevret, Rémy, 17, rue Curial, F-75019 Paris
(FR)**

(74) Mandataire: **Ernst-Schonberg, Michel et al, R.N.U.R.
S. 0804 B.P. 103 8 & 10, avenue Emile-Zola,
F-92109 Boulogne Biliancourt (FR)**

ACTORUM AG

## Joint de Cardan à axes décalés

L'invention concerne les joints de Cardan à axes décalés destinés à assurer la transmission d'un mouvement entre deux arbres pouvant faire entre eux un angle variable.

Il existe un grand nombre de types de cardans, mais le type le plus courant comprend un croisillon central et deux fourches terminant chacune un des arbres et s'articulant sur deux branches opposées du croisillon, l'articulation se faisant généralement au moyen de douilles à aiguilles, à la fois pour combler l'espace nécessaire au montage entre l'extrémité du croisillon et l'alésage de la fourche et pour réduire les frottements. Lorsque le cardan est destiné à transmettre une faible puissance, comme c'est le cas par exemple pour les cardans montés en automobile sur les colonnes de direction, cette solution comportant quatre douilles à aiguilles est inutilement complexe et onéreuse.

On connaît par le brevet français FR-A No 2129189 un joint de Cardan dans lequel chaque extrémité d'arbre en regard porte une tête constituée par deux cuvettes sensiblement hémisphériques diamétralement opposées et tournées vers l'extérieur, dans lesquelles sont introduites des billes de même diamètre. Le tout est entouré d'un manchon annulaire comportant lui-même des cuvettes sensiblement hémisphériques recevant la partie externe des billes précitées.

Les frottements entre les billes et les diverses cuvettes limitent le domaine d'application de ce type de joint.

On connaît par le brevet français FR-A No 2041381 un joint de Cardan dont les chapes des axes orthogonaux reçoivent une bague portant un chemin de roulement, tandis que l'ensemble des autres bagues de deux roulements assujettis auxdits axes sont confectionnées sur une même pièce découpée et pliée. Un tel cardan n'autorise pas l'emploi de roulements élémentaires de technologie éprouvée.

L'invention concerne donc un cardan simplifié pouvant être constitué à partir d'éléments de tôle découpés puis déformés à froid.

L'invention concerne plus précisément un joint de Cardan à axes décalés destinés à réunir deux arbres faisant entre eux un angle variable, dont les extrémités en regard sont respectivement élargies et rétrécies de façon qu'y soient fixées, à l'intérieur, les bagues extérieures en deux parties de deux roulements. Ce joint comporte deux axes orthogonaux dont chacun est monté sur l'un des deux arbres.

Selon l'invention, ce joint est caractérisé en ce que les bagues intérieures des roulements sont emmanchées, respectivement, sur les deux axes orthogonaux, lesquels sont solidaires d'un manchon de liaison monté au moyen dudit roulement sur l'extrémité rétrécie de l'un des arbres.

Pour mieux faire comprendre l'objet de l'invention, on va décrire, à titre d'exemples, des modes de réalisation de celle-ci en référence au dessin annexé dans lequel:

la fig. 1 est une représentation de la transmission par joint de Cardan associé à deux arbres angulairement décalés.

La fig. 2 est une coupe longitudinale selon la ligne II-II de la fig. 1.

La fig. 3 est une coupe transversale de la transmission selon la ligne III-III de la fig. 2.

Les fig. 4 et 5 sont des coupes transversales de variantes de réalisation d'une partie de la transmission telle que représentée à la fig. 3.

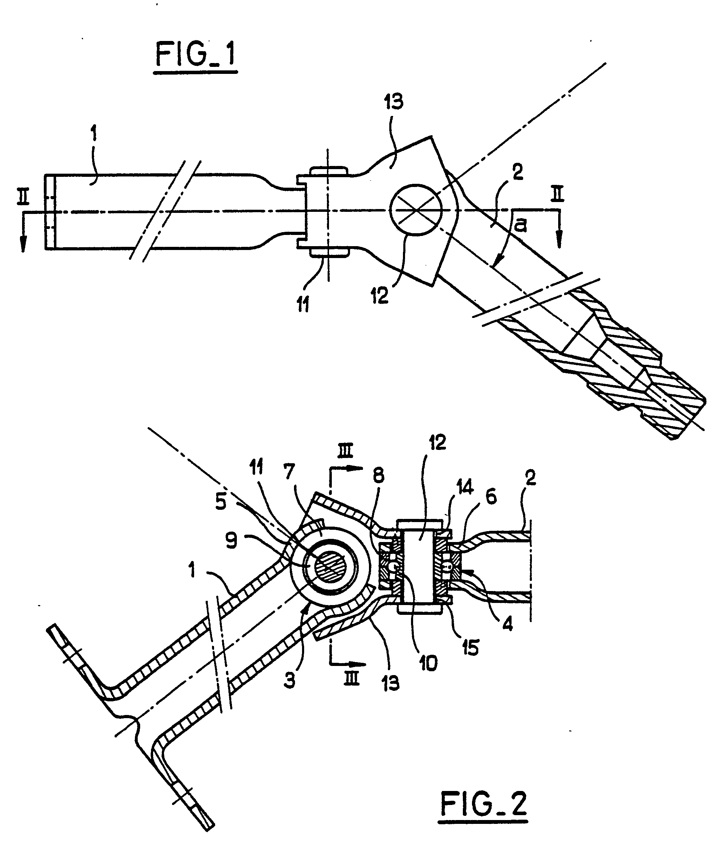

Comme on le voit sur les fig. 1 et 2, l'invention consiste à rendre chacun des deux arbres creux 1 et 2, qui font entre eux un angle variable a, solidaire de l'organe d'un roulement 3, 4. A cet effet, les extrémités des arbres 1, 2 en regard sont élargies ou rétrécies pour former des logements 5, 6 qui reçoivent la bague extérieure 7 ou 8 du roulement correspondant 3 ou 4.

Les bagues extérieures 7, 8 des deux roulements 3, 4 sont maintenues dans les logements correspondants 5, 6 par tout moyen connu (sertissage, soudure, etc.).

Les bagues intérieures 9, 10 des roulements correspondants 3, 4 sont emmanchées sur des axes orthogonaux 11, 12, rendus solidaires d'un manchon de liaison 13.

Le manchon de liaison 13 est localement aplati et porte des trous poinçonnés 14, 15 de passage des axes 11, 12. Dans le but d'éviter les déplacements axiaux des bagues 9, 10 le long des axes 11, 12, ceux-ci reçoivent des douilles d'espacement 16 qui sont respectivement en appui sur les faces intérieures en regard du manchon 13 et sur la face correspondante de la bague 9 ou 10.

Les axes 11, 12 peuvent être constitués par des rivets, ainsi que cela est représenté au dessin, ou par des boulons.

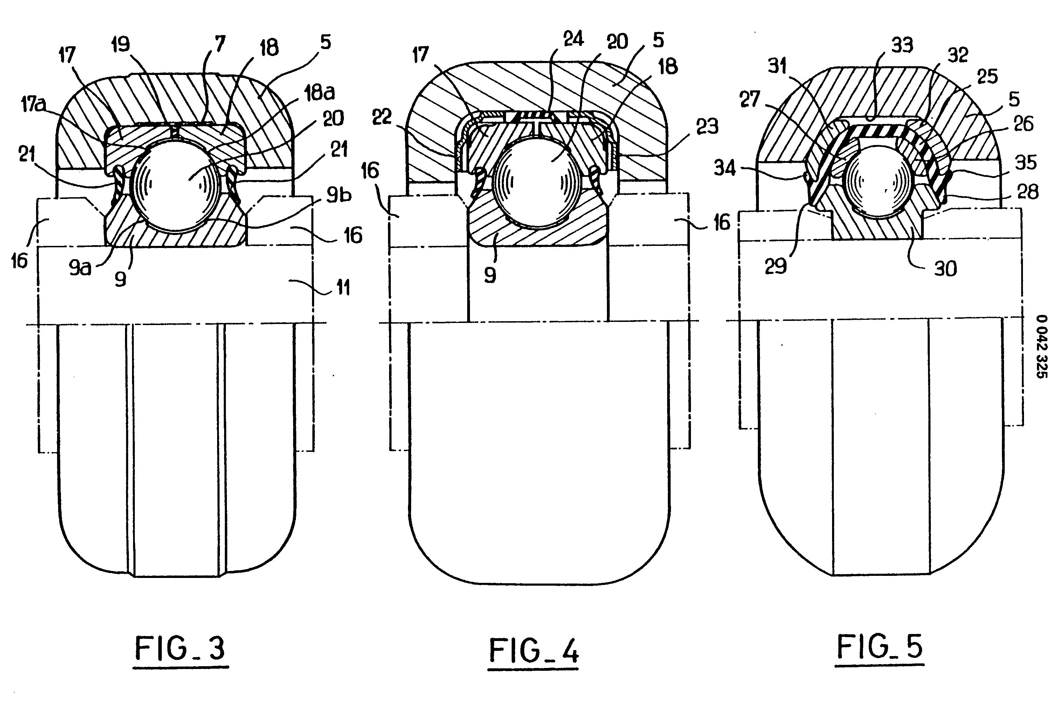

Les bagues extérieures 7, 8 possèdent deux parties 17, 18 pouvant être séparées par un moyen de rattrapage des jeux 19, dont chacune porte une piste de roulement 17a, 18a en contact oblique avec les corps roulants 20. Selon la fig. 3, le moyen de rattrapage des jeux est constitué par une matière plastique qui joue également le rôle d'organe d'étanchéité entre les parties 17, 18 de la bague extérieure. La bague intérieure en une ou deux parties porte également une piste de roulement 9a, 9b à contact oblique.

Selon l'exemple représenté, les corps roulants 20 sont des billes montées sans cage entre les bagues 7, 9, et le roulement est rendu étanche au moyen de joints latéraux 21.

Il est à noter que l'une ou l'autre bague 7, 9 peut porter une piste de roulement conventionnelle.

Les éléments 17, 18 de la bague extérieure sont montés radialement serrés dans les logements 5, 6 des arbres 1, 2.

Selon l'exemple représenté à la fig. 4, le moyen de rattrapage des jeux est constitué par des ressorts 22, 23 placés à la périphérie et sur les faces latérales des éléments de bague 17, 18. Les ressorts 22, 23 sont ici des lames ondulées d'acier à ressort. Les ondulations sont formées à la périphérie et sur les faces latérales des deux éléments de bague 17, 18, et un joint d'étanchéité 24 assure l'étanchéité entre les éléments de bague 17, 18.

Selon l'exemple de réalisation illustré par la fig. 5, le moyen de rattrapage des jeux est constitué par une membrane élastomère compressible 25. La membrane 25 coiffe ici les chemins de roulement extérieurs fractionnés 26, 27 et est en appui étanche, par ses lèvres latérales 28, 29, sur la bague intérieure 30.

Dans cette réalisation, les chemins de roulement 26, 27 sont en acier embouti, cémenté et trempé.

Des coupelles de montage 31, 32 sont placées entre les extrémités de l'arbre 1 ou 2, embouties en forme d'ogive 33, et la membrane 25, et sont retenues au moyen de protubérances 34, 35 moulées *in situ* avec la membrane.

Le joint de Cardan conforme à l'invention peut être réalisé économiquement à partir d'éléments de tôle emboutis ou découpés et trouve une application intéressante pour la transmission des couples entre deux tronçons d'une colonne de direction.

## Revendications

1. Joint de Cardan à axes décalés destiné à réunir deux arbres (1, 2) faisant entre eux un angle variable, dont les extrémités en regard (5, 6) sont respectivement élargies et rétrécies de façon qu'y soient fixées à l'intérieur les bagues extérieures (7, 8) en deux parties (17, 18) de deux roulements (3, 4), ledit joint comportant deux axes orthogonaux 11 et 12 montés respectivement sur les arbres 1 et 2, caractérisé en ce que les bagues intérieures (9, 10) des roulements (3, 4) sont emmanchés, respectivement, sur les deux axes orthogonaux (11, 12), lesquels sont solidaires d'un manchon de liaison (13) monté, au moyen dudit roulement (4), sur l'extrémité rétrécie (6) de l'un (2) desdits arbres.

2. Joint de Cardan selon la revendication 1, caractérisé par le fait que la bague extérieure (7, 8) repose sur un moyen de rattrapage des jeux.

3. Joint de Cardan selon la revendication 2, caractérisé par le fait que le moyen de rattrapage des jeux est constitué par une matière plastique élastique.

4. Joint de Cardan selon la revendication 2, caractérisé par le fait que le moyen de rattrapage des jeux est constitué par des ressorts (22, 23) placés à la périphérie et sur les faces latérales de la bague extérieure, respectivement au contact du logement porté par l'extrémité de l'arbre réuni audit joint de Cardan.

5. Joint de Cardan selon la revendication 3, caractérisé par le fait que le moyen de rattrapage de jeu est une membrane élastomère compressible (25) dont les parties latérales coiffent la bague intérieure du roulement de façon étanche.

## Patentansprüche

1. Kardangelenk mit zwei versetzten Achsen zum Zusammenführen von zwei unter sich einen veränderlichen Winkel bildenden Wellen (1, 2), deren sich gegenüber stehende Enden (5, 6) erweitert bzw. verengt sind, dergestalt, dass dort im Inneren die äusseren, aus zwei Teilen (17, 18) bestehenden Ringe (7, 8) zweier Lager (3, 4) befestigt sind, wobei das Gelenk zwei rechtwinkling zueinander angeordnete Achsen (11 und 12) enthält, die auf eine der Wellen (1 und 2) montiert sind, dadurch gekennzeichnet, dass die inneren Ringe (9, 10) der Lager (3, 4) auf eine der rechtwinkling angeordneten Achsen (11, 12) aufgesetzt sind, welche mit einer Verbindungsmuffe (13) fest verbunden sind, die vermittels des Lagers (4) auf das verengte Ende (6) der einen (2) der Wellen montiert ist.

2. Kardangelenk nach Anspruch 1, dadurch gekennzeichnet, dass der äussere Ring (7, 8) auf einem Spielverringerungsmittel ruht.

3. Kardangelenk nach Anspruch 2, dadurch gekennzeichnet, dass das Spielverringerungsmittel aus einer elastischen Plastikmasse gebildet ist.

4. Kardangelenk nach Anspruch 2, dadurch gekennzeichnet, dass das Spielverringerungsmittel durch an der Peripherie und den Seitenwänden des äusseren Ringes angebrachte Federn (22, 23) gebildet ist, die jeweils im Kontakt mit dem durch das Ende der Welle getragenen Gehäuse sind, das mit dem Kardangelenk verbunden ist.

5. Kardangelenk nach Anspruch 3, dadurch gekennzeichnet, dass das Spielverringerungsmittel eine zusammendrückbare Elastomermembrane (25) ist, deren Seitenteile den inneren Ring des Lagers abdecken.

## Claims

1. Cardan joint with off-set axes for uniting two shafts (1, 2), forming between them a variable angle, the opposite extremities (5, 6) of which are, respectively, expanded and contracted so that there are fixed inside them external rings (7, 8) in two parts (17, 18) of two bearings (3, 4), the said joint comprising two orthogonal axes (11, 12) mounted, respectively, on shafts (1, 2), characterized in that the inside rings (9, 10) of ball bearings (3, 4) are fitted, respectively, on two orthogonal axes (11 and 12) which are integral with a connection sleeve (13) mounted by means of said ball bearings (4) on the contracted end (16) of one (2) of the said shafts.

2. Cardan joint according to claim 1, characterized in that the external rings (7, 8) rest on a slack adjusting means.

3. Cardan joint according to claim 2, characterized in that the slack adjusting means is constitued by an elastic plastic material.

4. Cardan joint according to claim 2, characterized in that the slack adjusting means is constituted by springs (22, 23) placed at the periphery and on the lateral faces of the outside ring, respectively, on contact of the housing borne by the end of the shaft connected to the said cardan joint.

5. Cardan joint according to claim 3, characterized in that the slack adjusting means is a compressible elastomeric membrane (25), the lateral parts of which sealingly cover the inside ring of the ball bearing.

# FIG_1

# FIG_2

0 042 325

FIG_3

FIG_4

FIG_5